# EUROPEAN PATENT SPECIFICATION

(11) **EP 1 160 999 B1**
(45) Date of publication and mention of the grant of the patent: **01.09.2010**
(21) Application number: 00111774.6
(22) Date of filing: 03.06.2000
(51) Int. Cl.: H04B 7/08, H01Q 21/28, H04B 7/04

(54) **Antenna arrangement for a mobile telephone**
Antennenanordnung für ein Mobiltelefon
Agencement d'antenne pour un téléphone mobile

(43) Date of publication of application: 05.12.2001
(73) Proprietor: IPCom GmbH & Co. KG, 82049 Pullach (DE)
(72) Inventor: Jagielski, Ole, 9490 Pandrup (DK); Pedersen, Gert Frolund, 9280 Storvorde (DK)
(74) Representative: Gigerich, Jan

(56) References cited:
- EP-A- 0 444 679
- EP-A- 0 680 161
- WO-A-94/15378
- WO-A-96/35241

## Description

### Prior Art

The invention relates to an antenna arrangement according to the features of the generic part of the independent patent claim. From the EP 08 96 384 A2, it is already known to have multi-band antennas having a first and a second antenna element. The two antenna elements are coupled via coupling elements comprising a capacitor.

In WO 94/15378 A, a diversity antenna structure which permits two antennas configured in a diversity arrangement to be positioned in close proximity to each other is disclosed. In this diversity antenna structure, appropriate control algorithms are foreseen to determine which one of the two antennas will be selected for transmission or reception of modulated signals.

EP-A-0680161 discloses a radio apparatus comprising a plurality of antennas to be selectively connected to a radio circuit, switches capable of grounding a maximum point in the voltage distribution of a standing wave of each antenna, and a circuit for opening a switch of a non-selected antenna of these antennas to be grounded. An antenna switching circuit is included for selecting one antenna among a plurality of antennas. The selected antenna is connected to the radio circuit, while the rest of the antennas are grounded.

### Advantages of the invention

The antenna arrangement with the features of the independent patent claim has the advantage that a very compact multi- band antenna is described. This arrangement also includes the advantage of being capable to antenna diversity without an extra antenna.

Further advantages of the invention and further useful improvements arise from the features of the dependent patent claims. The antenna arrangement can be used as well for sending diversity and reception diversity. The antenna elements are to be produced in an easy way by using conductive plates arranged parallel to a ground-plate. These plates are connected via shortening pins to the ground-plate or via feeding pins to a transceiver. The operation of the different antenna elements is achieved by the use of switches that are operated simultaneously.

### Drawings

Antenna arrangements according to the invention are shown in the drawings and described in larger detail in the following description. The figures show:
figure 1 a perspective view of an antenna element,
figure 2 a cross-section according to the line II of figure 1,
figure 3 a cross-section along the line III of the figure 1,
figure 4 a switching arrangement in a first operating position and
figure 5 the same switching arrangement in a second operating position.

### Description

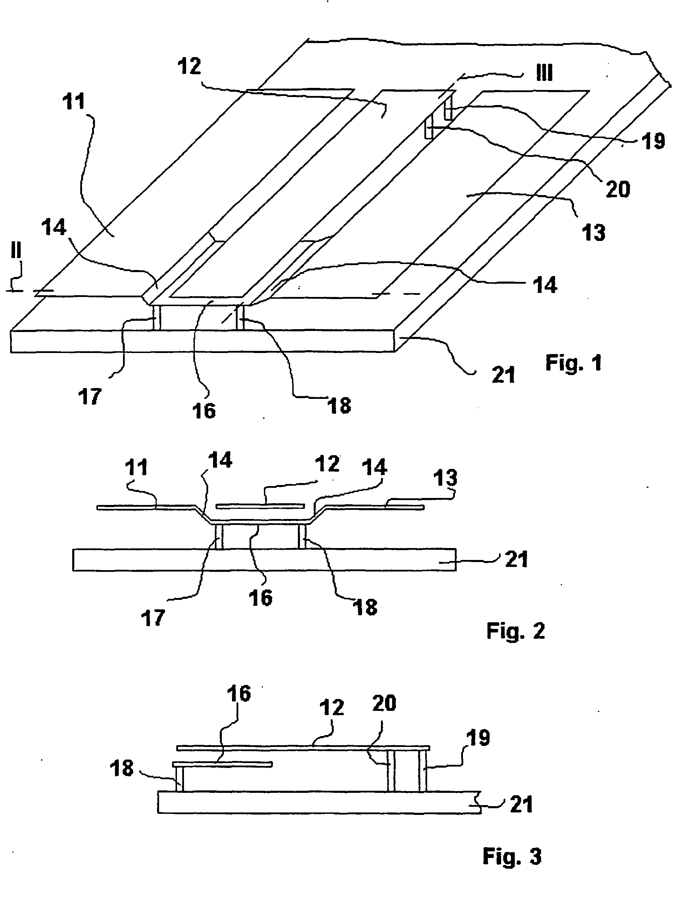

Figure 1 shows the perspective view of an antenna-element. figure 2 shows a cross-section according the line II and figure 3 shows a cross-section along the line III. The reference numbers in the figures 1, 2 ,3 are all the same and the following description relates to all the three figures.

Above a conduction ground-plate 21 is arranged an antenna arrangement comprising a first plate 11, second plate 12 and a third plate 13 that are substantially situated parallel to the substantially planar ground-plate 21. The first plate 11 and the third plate 13 are connected by the connecting-elements 14 and a connecting-plate 16, thereby forming a first antenna-element. The second plate 12 forms a second antenna-element. The first plate 11, the second plate 12, the third plate 13, the connecting-element 14 and the connecting-plate 16 are formed all of a conducting material especially a metal. For easy fabrication the first element is formed out of a single sheet of metal. As it can be seen especially in the figure 2 and 3 the second plate 12 and the connecting-plate 16 overlap each other so that they form a plate capacitance.

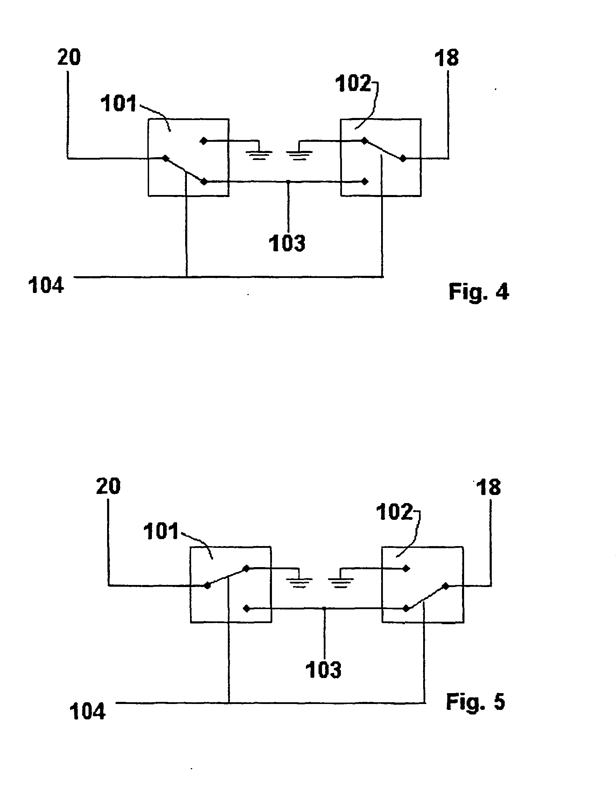

The first antenna-element is electrically connected by the shortening pin 17 with the conducting ground-plate 21. The shortening pin 17 is arranged in the area of the connecting-plate 16. Further the connecting-plate 16 is electrically connected to a feeding pin 18, that can be connected to a transceiver as described later to the figures 4 and 5. The second antenna-element, the second plate 12, is also electrically connected to the conducting ground-plate 21 by the shortening pin 19. Further the second plate 12 is electrically connected to a feeding pin 20, that also can be connected to a transceiver.

As seen in the figure 2, all the plate-elements 11, 12, 13 have approximately the same distance to the ground-plate 21. It is also possible, that the distance of this elements vary, for example that the second plate 12 has a larger or lower distance relative to the ground-plate 21. As seen in figure 3, the second plate 12 is substantially parallel to and the third plate 13. It is also possible, that these plate-elements are not completely parallel but have an angle respectively to the ground-plate 21. It is also possible, that the ground-plate 21 is not a completely flat plate, but has some kind of curvature. This will especially happen, if this antenna-element is arranged on the back-side of a mobile telephone, whereby the ground-plate 21 forms a housing element for the electrical circuits of the mobile telephone.

This antenna having the first antenna-element and the second antenna-element is especially useful when used with a mobile telephone. Mobile phones are used under changing conditions. In consequence the quality of the radio channel changes all the time. Antenna diversity is a method to react to the variant conditions of the radio channel. The inventive antenna arrangement as shown in the figures 1, 2, 3 has the advantage of being a very compact antenna arrangement and also being capable of antenna diversity.

If a radio frequency signal is applied to the feeding pin 18 the first antenna element comprising the first plate 11 and the third plate 13 will send a radio signal. The second plate 12 is electrically coupled to the first antenna element via the plate capacitance that is formed by the plate 12 and the connecting plate 16. Since the second antenna element is coupled electrically to the first antenna-element also the second antenna element will send a small part of the radio signal whereas the enclosure of the mobile phone will send transmitt most of the radio signal. By supplying a radio signal to the feeding pin 18 the whole antenna-arrangement, comprising the first antenna-element and the second antenna-element and to a large extend the enclosure of the mobile phone, will send a radio signal. If a radio signal is applied to the feeding pin 20 the second plate 12 and because of the coupling also the first plate 11 and the third plate 13, and to a small extent the enclosure of the mobile phone, will send the radio signal. The transmitted signal will be the same as the radio signal applying to the feeding point 18. The whole situation changes if one of the feeding points 18 will be connected to the ground-plate, when the other feeding point receives energy. This is described with respect to the figures 4 and 5.

The figures 4 and 5 show two switches 101 and 102 that are operated simultaneously by a signal applied to a control-line 104. Simultaneous operation means that the two switches 101 and 102 have two possible switching positions and that both switches can only be switched at the same time. Figure 4 shows the first operation position of the switches 101, 102 and figure 5 shows the second operation position of the two switches 101, 102.

The first switch 101 comprises an input which is connected by a connection-line 103 to a transceiver. The transceiver is an element which is capable to send or receive radio signals. In consequence a transceiver is able to be used to send or receive radio signals. The switch 101 comprises two outputs. One of the outputs of the switch 101 is connected to the feeding pin 20. The other output of the switch 101 is connected to an input of the switch 102. The switch 102 comprises two input-connections and one output. One input-connection is connected to the output of the switch 101, the other input of the switch 102 is connected to the ground. The output of the switch 102 is connected to the feeding pin 18. Both switches 101 and 102 are operated by applying signals to the control-line 104. Since both switches 101, 102 are connected to the control-line 104 both are actuated simultaneously. In the first position, as shown in figure 4, the feeding pin 20 is connected to the transceiver and the feeding pin 18 is connected to the ground-potential, that is also the potential of the conducting ground-plate 21. In the switching position as shown in figure 5 the feeding pin 18 is connected to the transceiver and the feeding pin 20 has no defined potential applied to thereto (floating pin).

Although there is only one antenna arrangement, depending on how the switches are operated, there is a substantial difference in the radiation emitted from the antenna arrangement. It is therefore possible to have antenna diversity with only one antenna arrangement. With antenna diversity the mobile telephone can send and receive radio signals with a different radiation pattern. This gives the mobile telephone the possibility to react to the varying conditions of the radio channel by selecting an appropriate antenna pattern for sending or reception of signals.

## Claims

1. Antenna arrangement for a mobile telephone comprising a first antenna element (11, 13, 14, 16) and a second antenna element (12), both are composed of conductive plates arranged parallel to a ground-plate (21), said antenna elements (11, 13, 14, 16 and 12) being electrically coupled to each other, a switching arrangement (101, 102) connecting either the first antenna element (11, 13, 14, 16) or the second antenna element (12) to a transceiver of the mobile telephone, **characterized in that** a first feeding pin (18) and a second feeding pin (20) are connected to a transceiver of the mobile telephone such that when a radio signal is applied to the first feeding pin (18) and the second feeding pin (20), transmit diversity is achieved.

2. Antenna arrangement according to claim 1, wherein the transceiver is capable of sending or receiving radio signals.

3. Antenna arrangement according to claim 2, wherein said antenna elements comprise conductive elements (11, 12, 13, 14, 16) above a conducting ground-plate (21), said conductive elements (11, 12, 13, 14, 16) are connected to the ground-plate (21) with shorting pins (17, 19), and said conductive elements (11, 12, 13, 14, 16) are connectable to the transceiver via feeding pins (18, 20).

4. Antenna arrangement according to claim 3, wherein the conductive elements (12, 16) have an overlapping area in which they form a plate capacitance.

5. Antenna arrangement according to claim 3 or 4, further comprising a first and a second switch (101, 102) that are operable simultaneously,wherein in a first position of the said switches (101, 102), the first feeding pin (18) is connected to the transceiver and the second feeding pin (20) is connected to the conducting ground-plate (21) and in the second position of said switches (101, 102), the first feeding pin (18) is connected to the conducting ground-plate (21) and the second feeding pin (20) is connected to the transceiver.

## Patentansprüche

1. Antennenanordnung für ein Mobiltelefon mit einem ersten Antennenelement (11, 13, 14, 16) und einem zweiten Antennenelement (12), die beide aus parallel zu einer Masseplatte (21) angeordneten leitfähigen Platten bestehen, wobei die Antennenelemente (11, 13, 14, 16 und 12) elektrisch miteinander gekoppelt sind, und eine Schaltanordnung (101, 102) entweder das erste Antennenelement (11, 13, 14, 16) oder das zweite Antennenelement (12) mit einem Sender/Empfänger des Mobiltelefons verbindet, **dadurch gekennzeichnet, dass** ein erster Zuführungsanschluss (18) und ein zweiter Zuführungsanschluss (20) derart mit einem Sender/Empfänger des Mobiltelefons verbunden sind, dass, wenn ein Funksignal an den ersten Zuführungsanschluss (18) und den zweiten Zuführungsanschluss (20) angelegt wird, Sendediversität erzielt wird.

2. Antennenanordnung nach Anspruch 1, wobei der Sender/Empfänger Funksignale senden oder empfangen kann.

3. Antennenanordnung nach Anspruch 2, wobei die Antennenelemente leitfähige Elemente (11, 12, 13, 14, 16) oberhals einer leitenden Masseplatte (21) umfassen, die leitfähigen Elemente (11, 12, 13, 14, 16) mit Kurzschlussanschlüssen (17, 19) mit der Masseplatte (21) verbunden sind und die leitfähigen Elemente (11, 12, 13, 14, 16) mittels Zuführungsanschlüssen (18, 20) mit dem Sender/Empfänger verbindbar sind.

4. Antennenanordnung nach Anspruch 3, wobei die leitfähigen Elemente (12, 16) einen Überlappungsbereich aufweisen, in dem sie eine Plattenkapazität bilden.

5. Antennenanordnung nach Anspruch 3 oder 4, ferner mit einem ersten und einem zweiten Schalter (101, 102), die gleichzeitig betreibbar sind, wobei in einer ersten Stellung der Schalter (101, 102) der erste Zuführungsanschluss (18) mit dem Sender/Empfänger verbunden ist und der zweite Zuführungsanschluss (20) mit der leitenden Masseplatte (21) verbunden ist und in der zweiten Stellung der Schalter (101, 102) der erste Zuführungsanschluss (18) mit der leitenden Masseplatte (21) verbunden wird und der zweite Zuführungsanschluss (20) mit dem Sender/Empfänger verbunden ist.

## Revendications

1. Agencement d'antenne pour un téléphone mobile, comprenant un premier élément d'antenne (11, 13, 14, 16) et un deuxième élément d'antenne (12), tous deux composés de plaques conductrices agencées parallèlement à une plaque de masse (21), lesdits éléments d'antenne (11, 13, 14, 16 et 12) étant reliés électriquement les uns aux autres, un agencement de commutation (101, 102) reliant le premier élément d'antenne (11, 13, 14, 16) ou le deuxième élément d'antenne (12) à un émetteur-récepteur du téléphone mobile,
**caractérisé en ce qu'**une première broche d'alimentation (18) et une deuxième broche d'alimentation (20) sont reliées à un émetteur-récepteur du téléphone mobile de manière à obtenir une diversité d'émission lors de l'application d'un signal radio à la première broche d'alimentation (18) et à la deuxième broche d'alimentation (20).

2. Agencement d'antenne selon la revendication 1, l'émetteur-récepteur étant apte à émettre ou à recevoir des signaux radio.

3. Agencement d'antenne selon la revendication 2, lesdits éléments d'antenne comprenant des éléments conducteurs (11, 12, 13, 14, 16) au-dessus d'une plaque de masse (21) conductrice, lesdits éléments conducteurs (11, 12, 13, 14, 16) étant reliés à la plaque de masse (21) par des broches de court-circuit (17, 19), et lesdits éléments conducteurs (11, 12, 13, 14, 16) étant susceptibles d'être reliés à l'émetteur-récepteur par les broches d'alimentation (18, 20).

4. Agencement d'antenne selon la revendication 3, les éléments conducteurs (12, 16) présentant une région de chevauchement où ils forment une capacité entre plaques.

5. Agencement d'antenne selon la revendication 3 ou 4, comprenant en outre des premier et deuxième commutateurs (101, 102) susceptibles d'être actionnés simultanément, dans une première position desdits commutateurs (101, 102), la première broche d'alimentation (18) étant reliée à l'émetteur-récepteur et la deuxième broche d'alimentation (20) étant reliée à la plaque de masse (21) conductrice et, dans la deuxième position desdits commutateurs (101, 102), la première broche d'alimentation (18) étant reliée à la plaque de masse (21) conductrice et la deuxième broche d'alimentation (20) étant reliée à l'émetteur-récepteur.
